# EUROPÄISCHE PATENTSCHRIFT

(11) **EP 3 058 565 B1**
(45) Veröffentlichungstag und Bekanntmachung des Hinweises auf die Patenterteilung: **29.04.2020**
(21) Anmeldenummer: 14805475.2
(22) Anmeldetag: 16.10.2014
(51) Int. Cl.: G10L 15/26, G10L 15/22, G10L 15/30

(54) **SPRACHSTEUERUNGSVERFAHREN SOWIE COMPUTERPROGRAMMPRODUKT ZUR DURCHFÜHRUNG DES VERFAHRENS**
VOICE CONTROL METHOD AND COMPUTER PROGRAM PRODUCT FOR PERFORMING THE METHOD
PROCÉDÉ DE COMMANDE VOCALE AINSI QUE PRODUIT-PROGRAMME D'ORDINATEUR POUR EXÉCUTER LE PROCÉDÉ

(30) Priorität: 16.10.2013 DE 102013221022; 23.12.2013 DE 102013114763
(43) Veröffentlichungstag der Anmeldung: 24.08.2016
(73) Patentinhaber: paragon semvox GmbH, 66459 Limbach (DE)
(72) Erfinder: PFALZGRAF, Alexander, 66121 Saarbrücken (DE); PFLEGER, Norbert, 66132 Saarbrücken (DE)
(74) Vertreter: Patentanwälte Bernhardt / Wolff Partnerschaft mbB
(86) Internationale Anmeldenummer: PCT/DE2014/100372
(87) Internationale Veröffentlichungsnummer: WO 2015/055183

(56) Entgegenhaltungen:
- US-A1- 2003 236 664
- US-A1- 2007 276 651
- US-B1- 6 324 513

## Beschreibung

Die Erfindung betrifft ein Sprachsteuerungsverfahren, insbesondere zur Steuerung eines Personalcomputers, eines Smartphones, eines Bordcomputers eines Fahrzeugs oder sonstiger Vorrichtungen, bei dem ermittelt wird, ob aus gesprochener Sprache, die mittels einer Aufnahmeeinrichtung aufgenommen und mittels einer Spracherkennungseinrichtung verarbeitet wird, ein Steuerungsauftrag bestimmt werden kann, wobei eine Sprachsteuerungseinrichtung mittels einer Software betrieben wird, die durch zumindest eine Erweiterungssoftware, welche zum Download von einem Server bereitgestellt wird, verändert werden kann, wobei die Sprachsteuerungseinrichtung eine Einrichtung zur Veränderung der Software umfasst, die, sofern festgestellt worden ist, dass die Sprachsteuerungseinrichtung zur Bestimmung und Bearbeitung des Steuerungsauftrags nicht eingerichtet ist, überprüft, ob die Sprachsteuerungseinrichtung mittels der einen Erweiterungssoftware zur Bestimmung und zur Bearbeitung des Steuerungsauftrags eingerichtet werden kann.

Ein solches Sprachsteuerungsverfahren geht aus der US 2007/0276651 A1 hervor, die ein Gerät beschreibt, das sich mittels einer Software durch gesprochene Sprache steuern lässt. Die Software lässt sich durch Anpassung der Grammatik, die der Sprachsteuerung zugrunde liegt, über ein Update verändern, wenn ein Steuerungsauftrag nicht bearbeitet werden kann.

Weitere Sprachsteuerungsverfahren gehen aus der US 2003/0236664 A1 und der US 6,324,513 B1 hervor.

Weitere Verfahren zur Steuerung von Computern, Smartphones und Bordcomputern von Fahrzeugen sind durch Benutzung bekannt.

Ziel derzeitiger Entwicklungen ist, eine Erkennung des Steuerungsauftrags aus frei gesprochener Sprache zu ermöglichen. Während bei Nutzung einer Steuerungseinrichtung mit grafischer Benutzerschnittstelle stets Funktionen angezeigt werden, die mit der Steuerungseinrichtung ausgeführt werden können und von denen einzelne auswählbar sind, soll eine solche Vorgabe bei den mittels freier Sprache bedienbaren Sprachsteuerungseinrichtungen nicht bestehen. Potentiell kann deshalb eine große Vielfalt von Funktionen angefordert werden. Darüber hinaus kommen sprachlich vielfältige Formulierungen für die Steuerungsaufträge infrage.

An die Erkennung der frei gesprochenen Sprache sind deshalb besonders hohe Anforderungen gestellt. Aus der gesprochenen Sprache muss zumindest ein Wort erkannt werden, das die Sprachsteuerungseinrichtung verarbeiten kann, und darüber hinaus dem erkannten Wort ein verarbeitbarer Steuerungsauftrag zugeordnet werden können. Gelingt dies nicht, wird bei den bekannten Verfahren eine Fehlermeldung ausgegeben und es muss hingenommen werden, dass der sprachlich angeforderte Steuerungsauftrag nicht erledigt werden kann.

Durch Benutzung ist es hinlänglich bekannt, für eine Aktualisierung der Software der jeweiligen Sprachsteuerungseinrichtung, beispielsweise zur Fehlerbehebung oder zur Hinzufügung weiterer Funktionen, auf einem mit der Sprachsteuerungseinrichtung zur Datenübertragung verbindbaren Server ein Update bereitzustellen, das auf die Sprachsteuerungseinrichtung geladen werden kann.

Die Erfindung ist im beigefügten Anspruchssatz beschrieben.

Der Erfindung liegt die Aufgabe zugrunde, eine Möglichkeit zu schaffen, die Sprachsteuerungseinrichtung bedarfsgerecht an sprachlich erteilte Steuerungsaufträge anzupassen.

Erfindungsgemäß wird diese Aufgabe dadurch gelöst, dass die Software mittels der Erweiterungssoftware derart verändert wird, dass mittels der Software ein Zugriff auf vorher nicht aufrufbare Information aus dem Internet ermöglicht wird, indem in die Software eine Schnittstelle zur Kontaktaufnahme mit einem Informationsdienst im Internet implementiert wird und die Software derart aktualisiert wird, dass sie über die Schnittstelle aus dem Internet neu abrufbare Informationen verarbeiten kann.

Die Funktionsvielfältigkeit des Sprachsteuerungsverfahrens und der jeweils damit betriebenen Vorrichtung kann so auf verhältnismäßig einfache Weise, nämlich durch Implementierung einer Schnittstelle zu einem Web-Dienst, bei dem die Information abrufbar ist, sowie ggf. von Regeln zur Verarbeitung der Information erweitert werden.

Wird festgestellt, dass sich die Sprachsteuerungseinrichtung mittels der Erweiterungssoftware zur Bestimmung des Steuerungsauftrags einrichten lässt, kann entweder einem Benutzer der Sprachsteuerungseinrichtung der Download der Erweiterungssoftware und die Veränderung der Software angeboten werden oder die Erweiterungssoftware sowohl automatisch vom Server geladen als auch die Software verändert werden. Ein Funktionsumfang der Sprachsteuerungseinrichtung kann dann angepasst an den jeweils durch gesprochene Sprache angeforderten Steuerungsauftrag erweitert und der Steuerungsauftrag bearbeitet und ggf. direkt erledigt werden.

Im Gegensatz zu den herkömmlichen Verfahren, bei denen eine Aktualisierung der Software nur unspezifisch zum jeweiligen Steuerungsauftrag vorgenommen wird, wird die Sprachsteuerung bei dem erfindungsgemäßen Verfahren nur dann aktualisiert, wenn es für eine Verarbeitung der gesprochenen Sprache tatsächlich notwendig ist.

Ferner kann vorgesehen sein, dass lediglich die jeweils zu dem Steuerungsauftrag passende Erweiterungssoftware geladen wird, sodass die Sprachsteuerungseinrichtung nur um eine Funktion erweitert wird, mit welcher der sprachlich angeforderte Steuerungsauftrag bearbeitet werden kann. Im Vergleich zu den bekannten allgemeinen Updates, bei denen eine Vielzahl von Änderungen durchgeführt wird, wird die Menge von Daten zur Übertragung der Erweiterungssoftware vom Server auf die Sprachsteuerungseinrichtung sowie die Ladezeit gering gehalten und dadurch die Datenübertragungsnetze entlastet. Darüber hinaus wird auf einem Speichermedium der Sprachsteuerungseinrichtung nur ein vergleichsweise geringer zusätzlicher Speicherplatz beansprucht, der wegen der Veränderung benötigt wird.

In einer Ausgestaltung der Erfindung übermittelt die Veränderungseinrichtung die aufgenommene gesprochene Sprache und/oder ein Ergebnis einer Verarbeitung der gesprochenen Sprache mittels der Spracherkennungseinrichtung an eine Sucheinrichtung, die in der Sprachsteuerungseinrichtung oder/und extern auf einem zur Datenübertragung mit der Sprachsteuerung verbundenen Server gebildet ist, und die Sucheinrichtung ermittelt, ob die Sprachsteuerungseinrichtung durch die Erweiterungssoftware derart veränderbar ist, dass sie zur Bestimmung und Bearbeitung des Steuerungsauftrags eingerichtet werden kann.

Zweckmäßigerweise greift die Sucheinrichtung dazu auf eine Datenbank zu, in der unterschiedliche Erweiterungssoftware gespeichert ist, die die Spracherkennungsfähigkeit der Sprachsteuerung verbessern oder die Software um unterschiedliche Funktionen erweitern kann, und ermittelt, ob die Datenbank zumindest eine Erweiterungssoftware umfasst, mit der die Sprachsteuerungseinrichtung zur Bestimmung sowie und ggf. Erledigung des Steuerungsauftrags eingerichtet werden kann.

In die Datenbank wird zweckmäßigerweise fortlaufend zusätzliche Erweiterungssoftware, mit der die Funktionalität der Sprachsteuerungseinrichtung erweitert werden kann, aufgenommen, sodass sich mittels der Sucheinrichtung stets feststellen lässt, ob sich die Sprachsteuerungseinrichtung mittels der aktuell verfügbaren Erweiterungssoftware zur Durchführung des sprachlich angeforderten Steuerungsauftrags einrichten lässt.

In der Datenbank ist in einer Ausgestaltung der Erfindung zu jeder der hinterlegten Erweiterungssoftware zumindest ein Datensatz abrufbar, der zumindest ein Schlüsselwort oder zumindest eine Kombination von Schlüsselwörtern enthält, das bzw. die gesprochene Steuerungsaufträge charakterisieren, die mittels der Erweiterungssoftware bestimmt und bearbeitet werden können.

Zweckmäßigerweise lädt die Veränderungseinrichtung die Erweiterungssoftware von dem Server, wenn festgestellt worden ist, dass die Sprachsteuerungseinrichtung mittels der Erweiterungssoftware zur Bestimmung und Bearbeitung des Steuerungsauftrags eingerichtet werden kann, und die Erweiterungssoftware verändert die Software nach dem Laden derart, dass der Steuerungsauftrag bestimmt und bearbeitet werden kann.

In einer besonders bevorzugten Ausführungsform der Erfindung wird der Steuerungsauftrag nach Veränderung der Software automatisch erledigt, wobei die Sprachinterpretationseinrichtung den Steuerungsauftrag vorzugsweise erneut aus der aufgenommenen gesprochenen Sprache und/oder einem Ergebnis einer Verarbeitung der gesprochenen Sprache bestimmt.

Wenn die Veränderung der Software automatisch erfolgt und der Steuerungsauftrag nach der Veränderung sprachlich nicht wiederholt werden muss, bemerkt der Benutzer die Veränderung der Sprachsteuerungseinrichtung nicht, insbesondere fällt ihm nicht auf, dass der Steuerungsauftrag vorher nicht erledigt werden konnte.

Zweckmäßigerweise greift die Sprachsteuerungseinrichtung auf eine Einrichtung zur Spracherkennung zu, die zum Erkennen eines Wortes und/oder zumindest einer Kombination mehrerer Wörter aus der gesprochenen Sprache eingerichtet ist.

In einer Ausgestaltung der Erfindung ermittelt die Spracherkennungseinrichtung bei Erkennung verschiedener Wörter oder verschiedener Kombinationen jeweilig Wahrscheinlichkeiten für die Richtigkeit der erkannten Wörter und stellt die Wörter bzw. die Kombination in einer Liste nach Wahrscheinlichkeiten geordnet bereit.

Die Spracherkennungseinrichtung ist zweckmäßigerweise lokal in der Sprachsteuerungseinrichtung oder/und auf einem externen Rechner, der zur Datenübertragung mit der Sprachsteuerungseinrichtung verbunden wird, gebildet.

Ist die Spracherkennungseinrichtung lokal in der Sprachsteuerungseinrichtung vorgesehen, besteht der Vorteil, dass keine Datenübertragung zu dem externen Rechner aufgebaut werden muss. Allerdings kann der externe Rechner mit einer im Vergleich zur Sprachsteuerungseinrichtung größeren Rechenkapazität versehen sein und auf größere und ggf. aktuellere Spracherkennungsdatenbanken zugreifen und damit ein qualitativ besseres Spracherkennungsergebnis liefern. Wird die Spracherkennungseinrichtung sowohl lokal als auch extern durchgeführt, wird für die Bearbeitung des Steuerungsauftrags nicht unbedingt eine Datenübertragung zum externen Rechner benötigt. Sie ist damit unabhängig von einem Netzzugang zur Datenübertragung. Besteht der Netzzugang aber, kann auf das oftmals bessere Spracherkennungsergebnis des externen Rechners zurückgegriffen werden.

In einer weiteren Ausgestaltung der Erfindung wird zumindest eines der erkannten Wörter oder zumindest eine der erkannten Kombinationen der Wörter, vorzugsweise das Wort bzw. die Kombination mit der größten ermittelten Wahrscheinlichkeit, an eine Sprachinterpretationseinrichtung übermittelt, welche ermittelt, ob aus dem Wort oder der Kombination der Wörter ein Steuerungsauftrag bestimmbar ist, den die Sprachsteuerungseinrichtung bearbeiten kann.

Die Sprachinterpretationseinrichtung umfasst dazu vorzugsweise eine Einheit zur semantischen Interpretation, die dem zumindest einen erkannten Wort anhand von grammatischen Verarbeitungsregeln eine Bedeutung für die Sprachsteuerungseinrichtung zuordnet und das Wort bzw. die Kombination in eine maschinenlesbare Information umwandelt, sowie eine Einheit zur kontextbasierten Interpretation, die ermittelt, ob die zugeordnete Bedeutung in Funktion von einem bereits zuvor gegebenen und ggf. bereits verarbeiteten Steuerungsauftrag und/oder in Funktion von anderen, die Sprachsteuerungseinrichtung oder die mit der Sprachsteuerungseinrichtung gesteuerte Vorrichtung betreffen, weiter präzisiert werden kann, und darüber hinaus feststellt, ob die Sprachsteuerungseinrichtung, die den Steuerungsauftrag bildende maschinenlesbare Information bearbeiten kann.

Um zu ermitteln, ob eine zur Bearbeitung des sprachlich angeforderten Steuerungsauftrags geeignete Erweiterungssoftware vorhanden ist, vergleicht die Sucheinrichtung mittels einer Vergleichseinrichtung, ob das Schlüsselwort bzw. die Schlüsselwortkombination in dem erkannten Wort bzw. der Wortkombination vorhanden ist. Sollten sich verschiedene Erweiterungssoftware eignen, wählt die Sucheinrichtung zum Herunterladen diejenige aus, die die größte Übereinstimmung aufweist oder bietet dem Benutzer verschiedene Erweiterungssoftware mit großer Übereinstimmung zum Herunterladen an.

In einer weiteren Ausgestaltung der Erfindung ist auch die Sucheinrichtung, ergänzend oder alternativ zu der genannten Vergleichseinrichtung, in gleicher Weise wie oben für die Sprachsteuerungseinrichtung beschrieben zur Sprachinterpretation, insbesondere zur semantischen und/oder kontextbasierten Sprachinterpretation, eingerichtet, damit sie die gesprochene Sprache und/oder das Ergebnis einer Verarbeitung der gesprochenen Sprache, die bzw. das von der Sprachsteuerung übermittelt worden ist, zur Suche in der genannten Datenbank verarbeiten kann.

Die Sucheinrichtung kann ferner eine eigene Spracherkennungseinrichtung umfassen oder eine im Verhältnis zum Server der Sucheinrichtung externe Spracherkennungseinrichtung zugreifen. Dies ist notwendig für den Fall, dass die Spracherkennung der Sprachsteuerungseinrichtung die gesprochene Sprache nicht erkennt und keine Spracherkennung auf dem externen Rechner verfügbar ist, weil sie nicht vorgesehen oder nicht erreichbar ist.

Die Erweiterungssoftware umfasst in einer Ausgestaltung der Erfindung zumindest ein Erweiterungsmodul zur Veränderung verschiedener Komponenten der Sprachsteuerung.

Die Erweiterungsmodule sind vorzugsweise zur Veränderung der Spracherkennungseinrichtung eingerichtet, wobei vorzugsweise Spracherkennungsregeln verändert werden.

Ferner kann das Erweiterungsmodul eingerichtet sein zur Veränderung der Sprachinterpretationseinrichtung, eines Dialogmanagers, der eine sprachliche Benutzerschnittstelle zwischen einem Benutzer der Sprachsteuerungseinrichtung und der Sprachsteuerungseinrichtung bildet, einer Sprachausgabeeinrichtung, mittels derer Informationen der sprachlichen Benutzerschnittstelle an der Benutzer übermittelt werden, und/oder einer grafischen Benutzeroberfläche zur Bedienung der Sprachsteuerungseinrichtung, wobei vorzugsweise Verarbeitungsregeln der jeweiligen Einrichtungen verändert werden.

In einer weiteren Ausführungsform der Erfindung umfasst das Erweiterungsmodul eine Definition einer Schnittstelle oder eine Implementierung der Schnittstelle zu der genannten über das Internet abrufbaren Information sowie Regeln für die Verarbeitung der Information.

In einer Ausgestaltung der Erfindung ist die Erweiterungssoftware derart vorgesehen, dass sie auch ein Erweiterungsmodul umfasst, mit dem eine Vorrichtungssoftware der Vorrichtung, mit der die Sprachsteuerungseinrichtung gesteuert wird, verändert werden kann. In dem Fall, dass der Steuerungsauftrag nicht erledigt werden kann, weil die Vorrichtung nicht dazu eingerichtet ist, kann die Vorrichtung selbst mit einer zusätzlichen Funktion versehen werden, die die Erledigung des Steuerungsauftrags erlaubt.

Die Erfindung betrifft ferner ein Computerprogrammprodukt gemäß der Ansprüche 10-14, sowie ein Computerprogrammprodukt gemäß Anspruch 15.

Die Erfindung wird nachfolgend anhand von Ausführungsbeispielen und den beigefügten Zeichnungen, die sich auf die Ausführungsbeispiele beziehen, näher erläutert. Es zeigen:
- Fig. 1: schematisch in einem Fahrzeug eingesetzte erfindungsgemäße Sprachsteuerung,
- Fig. 2: ein Diagramm, das die Funktionsweise der Sprachsteuerung erläutert,
- Fig. 3: ein weiteres Diagramm, das die Funktionsweise der Sprachsteuerung erläutert, und
- Fig. 4: in einem Diagramm die Funktionsweise einer weiteren Sprachsteuerung, und
- Fig. 5: ein Diagramm zur Erläuterung der Steuerung nach Fig. 4.

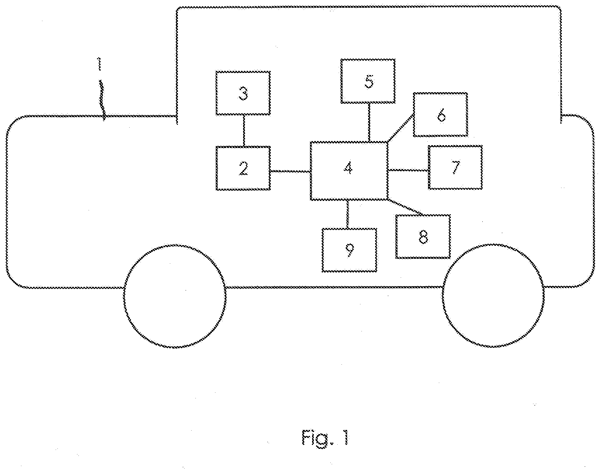

Ein in Fig. 1 dargestelltes Fahrzeug weist eine Sprachsteuerungseinrichtung 2 auf, die mit einer ein Mikrofon umfassenden Aufnahmeeinrichtung 3 verbunden und dazu eingerichtet ist, einen lokalen Rechner 4 des Fahrzeugs 1 zu steuern. Der lokale Rechner 4 ist mit einem GPS-Empfänger 6, einem Mobiltelefon 7, einer Audio/Videoanlage 8 und weiterer Fahrzeugelektronik 9, die Informationen über Fahrzeuggeschwindigkeit, -temperatur, Tankfüllung und dergleichen geben kann, verbunden und dazu eingerichtet, über eine Funkverbindung Daten ins Internet zu senden oder Daten von dort zu empfangen.

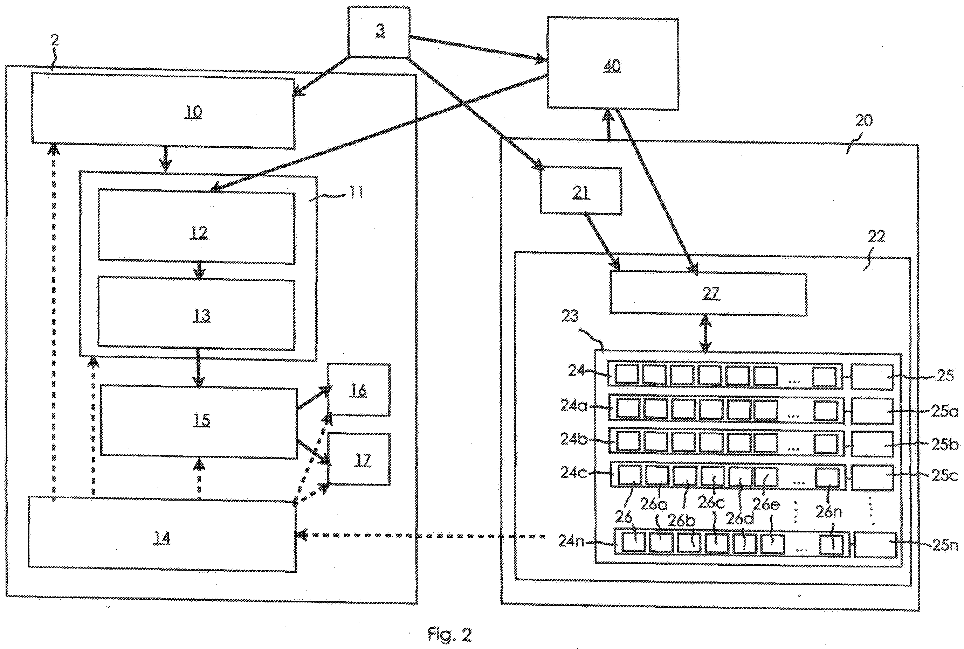

Die in Fig. 2 schematisch dargestellte Sprachsteuerungseinrichtung 2 umfasst einen Computer, in dessen internen Speicher eine Software geladen ist, die Softwareabschnitte umfasst, die einen lokalen Spracherkenner 10, eine Sprachinterpretationseinrichtung 11, welche eine semantische Interpretationseinrichtung 12 und eine kontextbasierte Interpretationseinrichtung 13 aufweist, eine Veränderungseinrichtung 14 und einen Dialogmanager 15, der eine Schnittstelle zwischen der Sprachsteuerung 2, einer Sprachausgabeeinrichtung 16 und einer grafischen Benutzerschnittstelle 17, die einen Touchscreen zur Anzeige und zur Bedienung der Sprachsteuerungseinrichtung 2 bildet.

Der Spracherkenner 10, die Sprachinterpretationseinrichtung 11 und ggf. auch die semantische Interpretationseinrichtung 12, die kontextbasierte Interpretationseinrichtung 13, die Veränderungseinrichtung 14 und/oder der Dialogmanager 15 könnten alternativ in einzelnen Hardwarekomponenten gebildet sein.

Die Sprachsteuerungseinrichtung 2 ist über eine Datenverbindung, z.B. über das Internet, mit einem Server 20 verbindbar, in dessen internen Speicher eine Software geladen ist, die Softwareabschnitte umfasst, mittels deren ein eigener Serverspracherkenner 21 sowie eine Sucheinrichtung 22 gebildet ist, die eine Vergleichseinrichtung 27 umfasst, welche auf eine auf dem Server 20 angelegte Datenbank 23 zugreifen kann, in der verschiedene Erweiterungssoftwarepakete 24 bis 24n sowie die Erweiterungssoftware 24 bis 24n charakterisierende Datensätze 25 bis 25n hinterlegt sind. Jeder der Datensätze 25 bis 25n umfasst zumindest ein Schlüsselwort oder zumindest eine Kombination mehrerer Schlüsselworte, die zu Steuerungsaufträgen gehören, die durch Installation des jeweiligen Erweiterungssoftwarepakets 24 bis 24n erledigt werden können.

Optional ist die Sprachsteuerungseinrichtung 2 ferner über eine Datenverbindung mit einem externen Spracherkennungsrechner 40 verbindbar.

Die Erweiterungssoftwarepakete 24 bis 24n sind dazu vorgesehen, die Sprachsteuerungseinrichtung 2 sowie den lokalen Rechner 4 mit zusätzlichen Funktionen zu versehen. Sie umfassen dazu n+1 verschiedene Erweiterungsmodule 26 bis 26n, die zur Veränderung des Spracherkenners 10, der Sprachinterpretationseinrichtung 11, des Dialogmanagers 15 sowie der Sprachausgabeeinrichtung 16 und der Benutzerschnittstelle 17 vorgesehen sind.

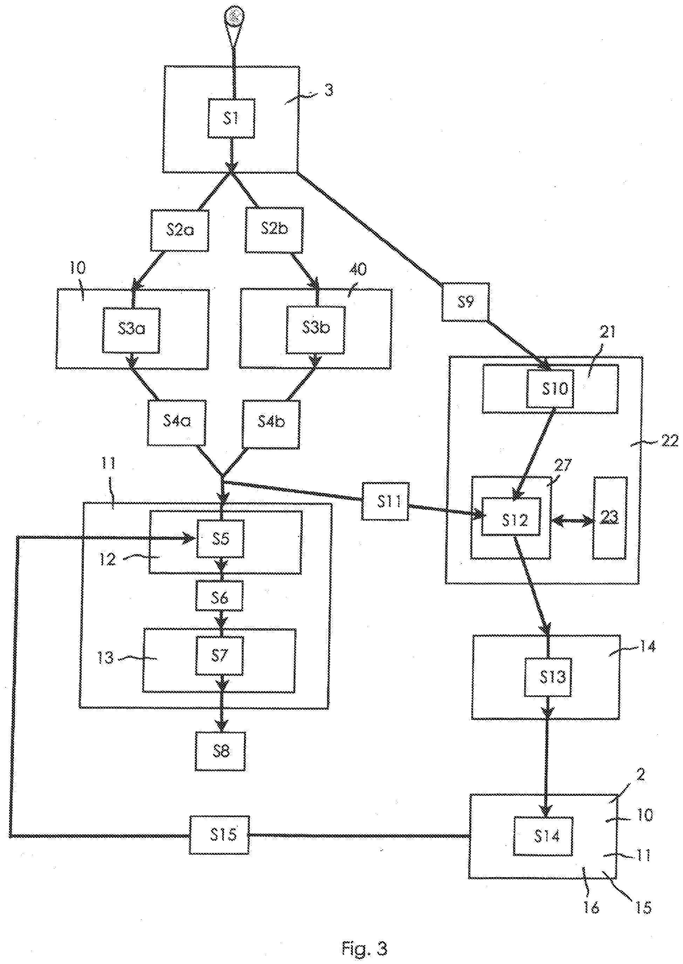

Wie schematisch in Fig. 3 dargestellt, wird beim Betrieb der Sprachsteuerungseinrichtung 2 ein in ein Mikrofon gesprochener Steuerungsauftrag in einem Verfahrensschritt S1 von der Aufnahmeeinrichtung 3 in digitale Audiodaten umgewandelt. Die Audiodaten werden an die Spracherkennungseinrichtung 10 der Sprachsteuerung 2 (Verfahrensschritt S2a) und optional gleichzeitig auf den externen Spracherkennungsrechner 40 übermittelt (Verfahrensschritt S2b).

Der lokale Spracherkenner 10 und ggf. der externe Spracherkennungsrechner 40 ermitteln aus den Audiodaten einzelne Wörter und ggf. Wortkombinationen. Werden unterschiedliche Wörter oder Wortkombinationen ermittelt, werden dafür jeweilige Wahrscheinlichkeiten bestimmt (Verfahrensschritte S3a und S3b) und die Wörter oder Wortkombinationen mit den jeweils größten ermittelten Wahrscheinlichkeiten an die Sprachinterpretationseinrichtung 11 weitergeleitet (Verfahrensschritte S4a und S4b).

In der semantischen Sprachinterpretationseinrichtung 12 werden die Wörter oder Wortkombinationen in eine maschinenverarbeitbare Information (Verfahrensschritt S5) umgewandelt und in Verfahrensschritt S6 an die kontextbasierte Interpretationseinrichtung 13 weiterleitet.

Die kontextbasierte Interpretationseinrichtung 13 ermittelt in Verfahrensschritt S7, ob der maschinenlesbare Steuerungsauftrag erledigt werden kann. Sofern dies möglich ist, erledigt die Steuerungseinrichtung den Steuerungsauftrag direkt (Verfahrensschritt S8). Sollte die Erledigung allein mittels der maschinenverarbeiteten Information der semantischen Sprachinterpretationseinrichtung 12 noch nicht verarbeitbar sein, prüft die kontextbasierte Interpretationseinrichtung 13, ob zur Erledigung des Steuerungsauftrags fehlende Informationen oder Informationsquellen, auf die die kontextbasierte Interpretationseinrichtung zugreifen kann, beispielsweise zuvor bearbeitete Steuerungsaufträge oder Zustandsdaten des GPS-Empfängers 6, des Mobiltelefons 7, der Audio-Video-Anlage 8 oder der Fahrzeugelektronik 9, bezogen werden kann und erledigt den maschinenlesbaren Steuerungsauftrag anhand dieser Informationen. Ferner besteht die Möglichkeit, dass die Sprachsteuerungseinrichtung 2 über den Dialogmanager 15 die fehlende Information einholt. Sofern dann die fehlende Information vorliegt, wird der Steuerungsauftrag erledigt (Verfahrensschritt S8).

Wird bei den vorgenannten Verfahrensschritten dagegen festgestellt, dass weder der lokale Spracherkenner 10 noch der externe Spracherkennungsrechner 40 aus der gesprochenen Sprache Wörter oder Wortkombinationen erkennen können, werden die Audiodaten an die Sucheinrichtung 22 übermittelt (Verfahrensschritt S9), die mittels des eigenen Spracherkenners 21 die Wörter bzw. Wortkombinationen bestimmt und diese an die Vergleichseinrichtung 27 weiterleitet (Verfahrensschritt S10).

Kann die semantische Sprachinterpretationseinrichtung 12 die Wörter bzw. Wortkombinationen nicht in einen maschinenverarbeitbaren Steuerungsauftrag umwandeln oder stellt die kontextbasierte Interpretationseinrichtung 13 fest, dass der maschinenverarbeitbare Steuerungsauftrag nicht erledigt werden kann, werden die die gesprochene Sprache abbildenden Daten, die zuvor mit dem lokalen Spracherkenner 10 oder dem externen Spracherkennungsrechner 40 bestimmt worden sind, direkt an die Vergleichseinrichtung 27 übermittelt (Verfahrensschritt S11).

Die Vergleichseinrichtung 27 prüft, ob in der Datenbank 23 ein Erweiterungssoftwarepaket 24 bis 24n vorhanden ist, mittels dessen sich die Sprachsteuerungseinrichtung 2 derart verändern lässt, dass der mittels der gesprochenen Sprache erteilte Steuerungsauftrag erledigt werden kann.

Dazu prüft die Vergleichseinrichtung 26, ob das bzw. die Schlüsselworte in dem aus der gesprochenen Sprache erkannten Wort bzw. der erkannten Wortkombination enthalten ist bzw. sind (Verfahrensschritt S12).

Ist lediglich ein einziges solches Erweiterungssoftwarepaket 24 bis 24n vorhanden, lädt die Veränderungseinrichtung 14 das Erweiterungssoftwarepaket 24 bis 24n auf den Computer der Sprachsteuerung 2 (Verfahrensschritt S13). Finden sich mehrere solche Erweiterungssoftwarepakete 24 bis 24n, wird entweder direkt dasjenige geladen, dessen Schlüsselworte die größte Übereinstimmung mit dem gesprochenen Steuerungsauftrag haben, oder dem Benutzer die Erweiterung der Softwarepakte 24 bis 24n, ggf. unter Angabe von Eigenschaften, Erweiterungssoftwarepakete 24 bis 24n, wie Preis, Funktionsumfang oder Hersteller, zur Auswahl angeboten.

Die Veränderungseinrichtung 14 verändert unter Installation des Erweiterungssoftwarepakets 24 bis 24n die Software des Computers der Sprachsteuerungseinrichtung 2 und passt dabei die Spracherkennungseinrichtung 10, die Sprachinterpretationseinrichtung 11, den Dialogmanager 15 sowie die Sprachausgabeeinrichtung 16 und die Benutzerschnittstelle 17 an (Verfahrensschritt S14).

In die Software kann dabei eine Schnittstelle zur Kontaktaufnahme mit einem Informationsdienst im Internet implementiert werden und die Software derart aktualisiert werden, dass sie die neu abrufbaren Informationen verarbeiten kann.

Ferner ist vorstellbar, dass die Veränderungseinrichtung 14 Softwareaktualisierungen auch im lokalen Rechner 4 des Fahrzeugs 1 oder der Fahrzeugelektronik 9 vornimmt.

Nach erfolgreicher Aktualisierung der Sprachsteuerungseinrichtung 2 werden die Audiodaten erneut dem lokalen Spracherkenner 10 zugeführt (Verfahrensschritt S15). Der Steuerungsauftrag kann erledigt werden, indem sie die oben beschriebenen Verfahrensschritte S3a bis S8 durchgeführt werden.

Anhand von konkreten sprachlichen Steuerungsaufträgen werden nachfolgend einzelne der oben genannten Verfahrensschritte näher erläutert. Benutzer B sagt: "Wo kann ich in der Nähe italienisch essen gehen?"

Nach Durchführung der Verfahrensschritte S1, S2a und S2b liefert der lokale Spracherkenner 10 kein Ergebnis, der externe Spracherkennungsrechner 40 ermittelt die Wortfolge "Wo kann ich in der Nähe etwas essen".

Die semantische Interpretationseinrichtung 12 liefert kein Ergebnis, da keine zu der Wortfolge passenden Interpretationsregeln vorliegen.

Daraufhin wird die mit dem externen Spracherkennungsrechner 40 ermittelte Wortfolge "Wo kann ich in der Nähe etwas essen" direkt an die Sucheinrichtung 22 übermittelt (Verfahrensschritt S11).

Die Sucheinrichtung 22 prüft, ob die einzelnen Wörter der Wortfolge in den Schlüsselwortkombinationen der Datensätze 25 bis 25n der Erweiterungssoftwarepakete 24 bis 24n vorhanden sind (Verfahrensschritt S12) und veranlasst das Herunterladen eines Erweiterungssoftwarepakets 24 bis 24n, dass die größte Übereinstimmung mit dem Auftrag aufweist, auf die Steuerungseinrichtung 2 (Verfahrensschritt S14). Die Veränderungseinrichtung 14 installiert das Erweiterungssoftwarepaket 24 bis 24n, wobei Schnittstellen zum Zugriff auf einen Informationsdienst im Internet installiert werden, der Informationen über Restaurants und dergleichen verfügt.

Anschließend werden die nach Verfahrensschritt S1 erzeugten Audiodaten erneut durch die Steuerungseinrichtung 2 gemäß der Verfahrensschritte S5 bis S8 weiterverarbeitet und damit der Steuerungsauftrag erledigt, beispielsweise indem die Benutzer mittels des Dialogmanagers 15, sei es über die Sprachausgabeeinrichtung 16 oder über die grafische Benutzerschnittstelle 17, Restaurants mitgeteilt werden.

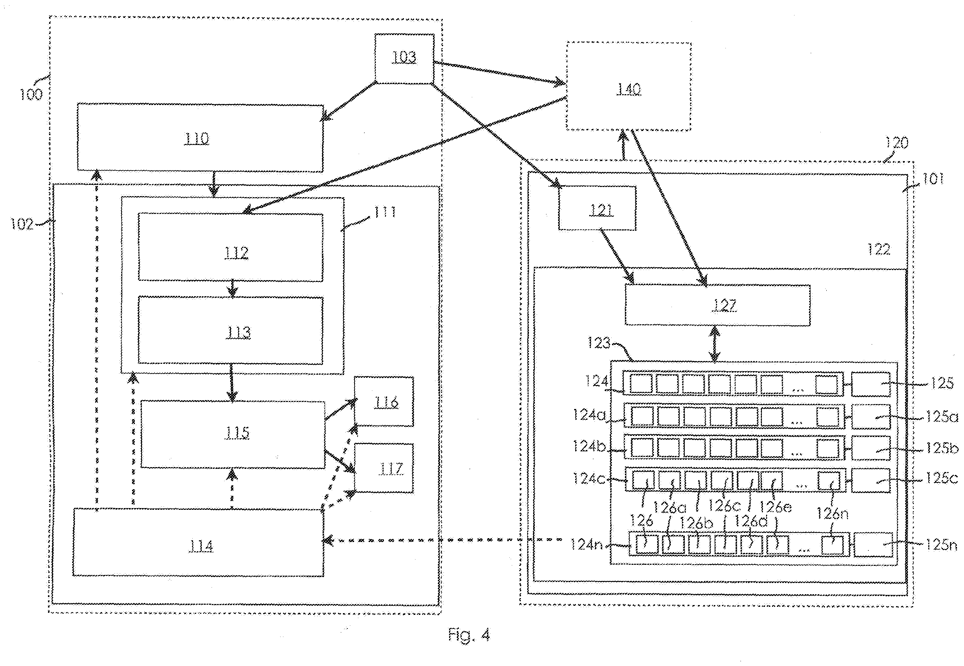

In Fig. 4 ist schematisch der Aufbau eines erfindungsgemäßen Computerprogrammprodukts dargestellt, das ein Computerprogramm umfasst, mittels dessen das oben beschriebene Verfahren durchgeführt werden kann, wenn das Computerprogramm auf einem Computer läuft.

Nachfolgend ist das Computerprogramm anhand einer Verwendung in einem Smartphone 100 erläutert, auf dessen Computer das Computerprogramm gespeichert ist. Es versteht sich, dass das Computerprogramm für diverse andere Vorrichtungen verwendbar ist, die mit gesprochener Sprache gesteuert werden können.

Über ein Aufnahmeeinrichtung 103 des Smartphones 100, die herkömmlich beim Telefonieren benutzt wird und ein Mikrofon sowie ein Computerprogramm zum Wandeln von Ton in Audiodaten geeignet ist, lassen sich bei Aktivierung des Computerprogramms Steuerungsaufträge zur Benutzung des Smartphones 100 aufnehmen und speichern und mittels eines Spracherkennungsprogramms 110 des Smartphones 100.

Das Computerprogramm umfasst ein Softwaremodul 102 zur Ermittlung eines Steuerungsauftrags aus gesprochener, mittels des Mikrofons des Smartphones aufgenommener und mittels des Spracherkennungsprogramms 110 verarbeiteter Sprache. Das Computerprogramm umfasst ferner ein Softwaremodul zur Sprachinterpretation 111, welches ein Softwaremodul zur semantischen Interpretation 112 und ein Softwaremodul zur kontextbasierten Interpretation 113 aufweist, ein Veränderungssoftwaremodul 114 und ein Dialogmanagersoftwaremodul 115, das eine Schnittstelle zu einer Sprachausgabeeinrichtung 116, die einen Lautsprecher des Smartphones umfasst, und einer grafischen Benutzerschnittstelle 117 zur Bedienung des Smartphones, die einen Touchscreen des Smartphones umfasst, bildet.

Das Sprachsteuerungssoftwaremodul 102 kann sich direkt oder über das Internet mit einem externen Spracherkennungsrechner 140, auf dem eine Spracherkennungssoftware läuft, sowie mit einem Server 120 verbinden. Das Smartphone wirkt dann als Client in einem mit dem Server 120 gebildeten Client-Server-System.

In einen internen Speicher des Servers 129 ist ein Servercomputerprogramm 101 geladen, das Teil des Computerprogrammprodukts ist und ein eigenes Serverspracherkennungsmodul 121 sowie ein Suchsoftwaremodul 122 umfasst, das ein Vergleichssoftwaremodul 127 aufweist, welches auf eine auf dem Server 120 angelegte Datenbank 123 zugreifen kann, in der verschiedene Erweiterungssoftwarepakete 124 bis 124n sowie die Erweiterungssoftware 124 bis 124n charakterisierende Datensätze 125 bis 125n hinterlegt sind. Jeder der Datensätze 125 bis 125n umfasst zumindest ein Schlüsselwort oder zumindest eine Kombination mehrerer Schlüsselworte, die zu Steuerungsaufträgen gehören, die durch Installation des jeweiligen Erweiterungssoftwarepakets 124 bis 124n erledigt werden können. Die Datenbank 123, die Erweiterungssoftwarepakete 124 bis 124n und/oder die Datensätze 125 bis 125n können ebenfalls Teile des Computerprogrammprodukts.

Die Erweiterungssoftwarepakete 124 bis 124n sind dazu vorgesehen, die Sprachsteuerungssoftwaremodule 102 und ggf. das Smartphone mit zusätzlichen Funktionen zu versehen. Sie umfassen dazu n+1 verschiedene Erweiterungsmodule 126 bis 126n, die zur Veränderung des Spracherkenners 10, der Sprachinterpretationseinrichtung 11, des Dialogmanagersoftwaremoduls 115 sowie der Sprachausgabeeinrichtung 116 und der Benutzerschnittstelle 117 vorgesehen sind.

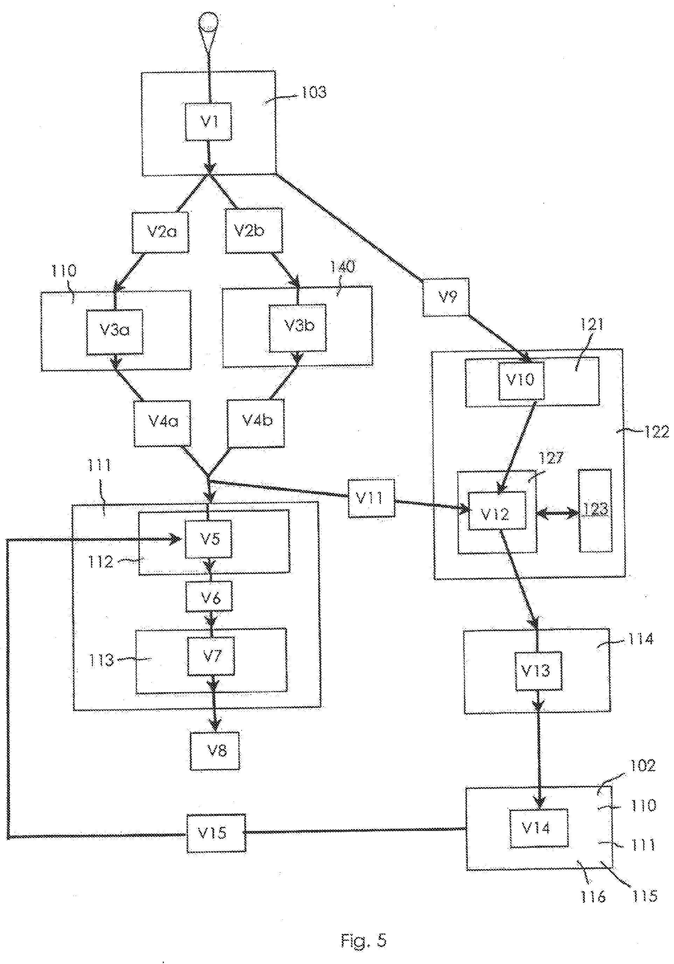

Fig. 5 zeigt schematisch die Funktionsweise des erfindungsgemäßen Computerprogrammprodukts in dem Smartphone 100, dem Spracherkennungsrechner 140 und dem Server 120.

In einem ersten Verfahrensschritt V1 wird ein in ein in das Mikrofon des Smartphones gesprochener Steuerungsauftrag mittels der Aufnahmeeinrichtung 103 in digitale Audiodaten umgewandelt. Die Audiodaten werden an das Spracherkennungsprogramm 110 (Verfahrensschritt V2a) und optional gleichzeitig auf den externen Spracherkennungsrechner 140 übermittelt (Verfahrensschritt V2b).

Das Spracherkennungsprogramm 110 und ggf. der externe Spracherkennungsrechner 140 ermitteln aus den Audiodaten einzelne Wörter und ggf. Wortkombinationen. Werden unterschiedliche Wörter oder Wortkombinationen ermittelt, werden dafür jeweilige Wahrscheinlichkeiten bestimmt (Verfahrensschritte V3a und V3b) und die Wörter oder Wortkombinationen mit den jeweils größten ermittelten Wahrscheinlichkeiten an das Sprachinterpretationsmodul 111 weitergeleitet (Verfahrensschritte V4a und V4b).

In dem Softwaremodul zur semantischen Sprachinterpretation 112 werden die Wörter oder Wortkombinationen in eine maschinenverarbeitbare Information (Verfahrensschritt V5) umgewandelt und in Verfahrensschritt V6 an das Softwaremodul zur kontextbasierten Interpretation 113 weiterleitet.

Das Softwaremodul zur kontextbasierten Interpretation 113 ermittelt in Verfahrensschritt V7, ob der maschinenlesbare Steuerungsauftrag erledigt werden kann. Sofern dies möglich ist, erledigt das Computerprogramm den Steuerungsauftrag direkt (Verfahrensschritt V8). Sollte die Erledigung allein mittels der maschinenverarbeiteten Information des Softwaremoduls zur semantischen Sprachinterpretation 112 noch nicht verarbeitbar sein, prüft das Softwaremodul zur kontextbasierten Interpretation 113, ob zur Erledigung des Steuerungsauftrags fehlende Informationen oder Informationsquellen, auf die das Softwaremodul zur kontextbasierten Interpretation 113 zugreifen kann, beispielsweise zuvor bearbeitete Steuerungsaufträge oder Zustandsdaten eins GPS-Empfängers des Smartphones 100, bezogen werden kann und erledigt den maschinenlesbaren Steuerungsauftrag anhand dieser Informationen. Ferner besteht die Möglichkeit, dass das Sprachsteuerungssoftwaremodul 102 über den Dialogmanager 15 die fehlende Information einholt. Sofern dann die fehlende Information vorliegt, wird der Steuerungsauftrag erledigt (Verfahrensschritt V8).

Wird bei den vorgenannten Verfahrensschritten dagegen festgestellt, dass weder die Spracherkennungssoftware 110 noch der externe Spracherkennungsrechner 140 aus der gesprochenen Sprache Wörter oder Wortkombinationen erkennen können, werden die Audiodaten an das Suchsoftwaremodul 122 übermittelt (Verfahrensschritt V9), das mittels des eigenen Spracherkennungsmoduls 121 die Wörter bzw. Wortkombinationen bestimmt und diese an das Vergleichssoftwaremodul 127 weiterleitet (Verfahrensschritt V10).

Kann das Softwaremodul zur semantischen Sprachinterpretation 112 die Wörter bzw. Wortkombinationen nicht in einen maschinenverarbeitbaren Steuerungsauftrag umwandeln oder wird mittels des Softwaremoduls zur kontextbasierten Interpretation 113 festgestellt, dass der maschinenverarbeitbare Steuerungsauftrag nicht erledigt werden kann, werden die die gesprochene Sprache abbildenden Daten, die zuvor mit dem Spracherkennungsprogramm 110 oder dem externen Spracherkennungsrechner 140 bestimmt worden sind, direkt an das Vergleichssoftwaremodul 127 übermittelt (Verfahrensschritt V11).

Das Vergleichssoftwaremodul 127 prüft, ob in der Datenbank 123 ein Erweiterungssoftwarepaket 124 bis 124n vorhanden ist, mittels dessen sich das Sprachsteuerungssoftwaremodul 102 derart verändern lässt, dass der mittels der gesprochenen Sprache erteilte Steuerungsauftrag erledigt werden kann.

Dazu prüft das Vergleichssoftwaremodul 126, ob das bzw. die Schlüsselworte in dem aus der gesprochenen Sprache erkannten Wort bzw. der erkannten Wortkombination enthalten ist bzw. sind (Verfahrensschritt V12).

Ist lediglich ein einziges solches Erweiterungssoftwarepaket 124 bis 124n vorhanden, lädt das Veränderungssoftwaremodul 114 das Erweiterungssoftwarepaket 124 bis 124n auf den Computer des Smartphones (Verfahrensschritt V13). Finden sich mehrere solche Erweiterungssoftwarepakete 124 bis 124n, wird entweder direkt dasjenige geladen, dessen Schlüsselworte die größte Übereinstimmung mit dem gesprochenen Steuerungsauftrag haben, oder dem Benutzer die Erweiterung der Softwarepakte 124 bis 124n, ggf. unter Angabe von Eigenschaften, Erweiterungssoftwarepakete 124 bis 124n, wie Preis, Funktionsumfang oder Hersteller, zur Auswahl angeboten.

Das Veränderungssoftwaremodul 114 verändert unter Installation des Erweiterungssoftwarepakets 124 bis 124n die Software des Computers des Smartphones und passt dabei Spracherkennungssoftwaremodul 110, das Sprachinterpretationssoftwaremodul 111, den Dialogmanager 115 sowie die Schnittstelle der Sprachausgabeeinrichtung 116 und die Benutzerschnittstelle 17 an (Verfahrensschritt V14).

In das Computerprogramm kann dabei eine Schnittstelle zur Kontaktaufnahme mit einem Informationsdienst im Internet implementiert werden und das Computerprogramm derart aktualisiert werden, dass es die neu abrufbaren Informationen verarbeiten kann.

Ferner ist vorstellbar, dass das Veränderungssoftwaremodul 114 Softwareaktualisierungen auch an weitere Software des Smartphones vornimmt.

Nach erfolgreicher Aktualisierung des Sprachsteuerungsmoduls 102 werden die Audiodaten erneut dem Spracherkennungsprogramm 110 zugeführt (Verfahrensschritt V15). Der Steuerungsauftrag kann erledigt werden, indem sie die oben beschriebenen Verfahrensschritte V3a bis V8 durchgeführt werden.

Ein weiteres (hier nicht anhand von Zeichnungen gezeigtes) Ausführungsbeispiel unterscheidet sich von demjenigen nach den Fig. 4 und 5 dadurch, dass das Suchsoftwaremodul inklusive dem Vergleichssoftwaremodul anstatt auf dem Server 120 auf dem Smartphone 100 gebildet ist und das Vergleichssoftwaremodul vom Smartphone aus auf die auf dem Server 120 gebildete Datenbank123 zugreift, um zu ermitteln, ob eine geeignete Erweiterungssoftware abrufbar ist.

## Patentansprüche

1. Sprachsteuerungsverfahren, insbesondere zur Steuerung eines Personalcomputers, eines Smartphones, eines Bordcomputers eines Fahrzeugs (1) oder sonstiger Vorrichtungen, bei dem ermittelt wird, ob aus gesprochener Sprache, die mittels einer Aufnahmeeinrichtung (3) aufgenommen und mittels einer Spracherkennungseinrichtung (10,21,40) verarbeitet wird, ein Steuerungsauftrag bestimmt werden kann, wobei eine Sprachsteuerungseinrichtung (2) mittels einer Software betrieben wird, die durch zumindest eine Erweiterungssoftware (24-24n), welche zum Download von einem Server (20) bereitgestellt wird, verändert werden kann, und die Sprachsteuerungseinrichtung (2) eine Einrichtung (14) zur Veränderung der Software umfasst, die, sofern festgestellt worden ist, dass die Sprachsteuerungseinrichtung (2) zur Bestimmung und Bearbeitung des Steuerungsauftrags nicht eingerichtet ist, überprüft, ob die Sprachsteuerungseinrichtung (2) mittels der Erweiterungssoftware (24-24n) zur Bestimmung und zur Bearbeitung des Steuerungsauftrags eingerichtet werden kann,
**dadurch gekennzeichnet,**
**dass** die Software mittels der Erweiterungssoftware (24-24n) derart verändert wird, dass mittels der Software ein Zugriff auf vorher nicht aufrufbare Information aus dem Internet ermöglicht wird, indem in die Software eine Schnittstelle zur Kontaktaufnahme mit einem Informationsdienst im Internet implementiert wird und die Software derart aktualisiert wird, dass sie die über Schnittstelle aus dem Internet neu abrufbare Informationen verarbeiten kann.

2. Verfahren nach Anspruch 1,
**dadurch gekennzeichnet,**
**dass** die Veränderungseinrichtung (14) die gesprochene Sprache und/oder ein Ergebnis einer Verarbeitung der gesprochenen Sprache mittels der Spracherkennungseinrichtung (10,21,40) an eine Sucheinrichtung (22) übermittelt, die in der Sprachsteuerungseinrichtung (2) oder extern auf einem zur Datenübertragung mit der Sprachsteuerungseinrichtung (2) verbunden Server (20) gebildet ist, und die Sucheinrichtung (22) ermittelt, ob die Sprachsteuerungseinrichtung (2) durch die Erweiterungssoftware (24-24n) derart veränderbar ist, dass sie zur Bestimmung und zur Bearbeitung des Steuerungsauftrags eingerichtet werden kann.

3. Verfahren nach Anspruch 1 oder 2,
**dadurch gekennzeichnet,**
**dass** die Sucheinrichtung (2) auf eine Datenbank (23) zugreift, die auf dem zur Datenübertragung mit der Sprachsteuerungseinrichtung (2) verbundenen Server (20) gebildet ist und in der die unterschiedliche Erweiterungssoftware gespeichert ist, die die Spracherkennungsfähigkeit der Sprachsteuerungseinrichtung verbessern oder/und die Software erweitern können, und ermittelt, ob die Datenbank zumindest eine Erweiterungssoftware umfasst, mit der die Sprachsteuerungseinrichtung zur Bestimmung und Bearbeitung des Steuerungsauftrags eingerichtet werden kann.

4. Verfahren nach einem der Ansprüche 1 bis 3,
**dadurch gekennzeichnet,**
**dass** die Veränderungseinrichtung (14) die Erweiterungssoftware von dem Server (20) lädt, wenn festgestellt worden ist, dass die Sprachsteuerungseinrichtung (2) mittels der Erweiterungssoftware(24-24n) zur Bestimmung und zur Bearbeitung des Steuerungsauftrags eingerichtet werden kann, und die Erweiterungssoftware (24-24n) die Software dann verändert derart, dass sie zur Bestimmung und zur Erledigung des Steuerungsauftrags eingerichtet wird.

5. Verfahren nach Anspruch 4,
**dadurch gekennzeichnet,**
**dass** der mittels der aufgenommenen Sprache ermittelte Steuerungsauftrag durch die mittels der Erweiterungssoftware (24-24n) veränderte Sprachsteuerungseinrichtung (2) bearbeitet wird und vorzugsweise der Steuerungsauftrag nach Veränderung der Software automatisch bearbeitet wird.

6. Verfahren nach einem der Ansprüche 1 bis 5,
**dadurch gekennzeichnet,**
**dass** die genannte Spracherkennungseinrichtung (10,21,40) lokal in der Sprachsteuerungseinrichtung (2) und/oder extern auf einem Server (20), der zur Datenübertragung mit der Sprachsteuerungseinrichtung (2) verbunden wird, gebildet wird.

7. Verfahren nach einem der Ansprüche 1 bis 6,
**dadurch gekennzeichnet,**
**dass** die Spracherkennungseinrichtung (10,21,40) und ggf. die Sucheinrichtung (22) eine Sprachinterpretationseinrichtung (11) umfassen, die eine Einheit (12) zur semantischen Interpretation aufweist, die das zumindest eine erkannte Wort in eine maschinenlesbare Information umwandelt, welche den Steuerungsauftrag bildet, wobei die Sprachinterpretationseinrichtung (11) und ggf. die Sucheinrichtung (2) vorzugsweise zusätzlich eine Einheit (13) zur kontextbasierten Interpretation umfassen, die ermittelt, ob die Sprachsteuerungseinrichtung (2) zur Bearbeitung des maschinenlesbaren Steuerungsauftrags eingerichtet ist.

8. Verfahren nach einem der Ansprüche 1 bis 7,
**dadurch gekennzeichnet,**
**dass** die Erweiterungssoftware (24-24n) verschiedene Erweiterungsmodule (26-26n) zur Veränderung unterschiedlicher Komponenten der Sprachsteuerungseinrichtung (2) umfasst, wobei die Erweiterungsmodule (26-26n) vorzugsweise zur Veränderung der Spracherkennungseinrichtung (2), der Sprachinterpretationseinrichtung (11), eines Dialogmanagers (15), der sprachlichen Benutzerschnittstelle zwischen einem Benutzer der Sprachsteuerungseinrichtung und der Sprachsteuerungseinrichtung bildet, einer Sprachausgabeeinrichtung (16), mittels derer Informationen der sprachlichen Benutzerschnittstelle an der Benutzer übermittelt werden, und/oder einer grafischen Benutzeroberfläche (17) zur Bedienung der Sprachsteuerungseinrichtung vorgesehen sind.

9. Verfahren nach einem der Ansprüche 2 bis 8,
**dadurch gekennzeichnet,**
**dass** die Sucheinrichtung (22) eine Vergleichseinrichtung (27) umfasst, die das Ergebnis der Verarbeitung der gesprochenen Sprache mittels der Spracherkennungseinrichtung (10,21,40) mit einem die Erweiterungssoftware kennzeichnenden Datensatz (25-25n), der vorzugsweise zumindest ein Schlüsselwort umfasst, vergleicht, wobei die Vergleichseinrichtung (27) vorzugsweise prüft, ob das Schlüsselwort oder mehrere Schlüsselworte in dem bei der Verarbeitung der gesprochenen Sprache ermittelten Wort bzw. den Worten enthalten ist.

10. Computerprogrammprodukt, insbesondere zur Bildung eines Clients in einem Client-Server-System, das direkt in den internen Speicher eines digitalen Computers geladen werden kann und ein Softwaremodul zur Sprachsteuerung, mittels dessen eine Sprachsteuerungseinrichtung (102) betreibbar ist, sowie ein Softwaremodul zur Ermittlung eines Steuerungsauftrags aufweist, mittels dessen sich ermitteln lässt, ob aus gesprochener, mittels einer Aufnahmeeinrichtung (103) aufgenommen und mittels einer Spracherkennungssoftware (110,121,140) verarbeiteter Sprache ein Steuerungsauftrag bestimmbar ist, wobei das Sprachsteuerungssoftwaremodul durch zumindest eine Erweiterungssoftware (124-124n), welche zum Download von einem Server (120) abrufbar ist, veränderbar ist, wobei das Computerprogrammprodukt ein Softwaremodul zur Veränderung des Sprachsteuerungssoftwaremoduls umfasst und das Veränderungssoftwaremodul dazu vorgesehen ist, bei Feststellung, dass das Sprachsteuerungssoftwaremodul zur Bestimmung und Bearbeitung des Steuerungsauftrags nicht eingerichtet ist, zu überprüfen, ob sich das Sprachsteuerungssoftwaremodul mittels der Erweiterungssoftware (124-124n) zur Bestimmung und zur Bearbeitung des Steuerungsauftrags einrichten lässt,
**dadurch gekennzeichnet,**
**dass** das Computerprogrammprodukt mittels der Erweiterungssoftware (24-24n) derart veränderbar ist, dass ein Zugriff auf vorher mittels des Computerprogrammprodukts nicht abrufbare Information aus dem Internet ermöglicht wird, indem in die Software eine Schnittstelle zur Kontaktaufnahme mit einem Informationsdienst im Internet implementiert wird und die Software derart aktualisiert wird, dass sie über die Schnittstelle aus dem Internet neu abrufbare Informationen verarbeiten kann.

11. Computerprogrammprodukt nach Anspruch 10,
**dadurch gekennzeichnet,**
**dass** das Computerprogrammprodukt ein Computerprogramm ist, das auf einem computerlesbaren Datenträger, vorzugsweise RAM, ROM, CD, DVD oder dergleichen, oder auf einem einen Computer umfassenden Gerät, insbesondere einem Personalcomputer, einem Smartphone, einem Bordcomputer eines Fahrzeugs oder einer sonstigen mittels Sprache steuerbarer Vorrichtung, gespeichert ist, oder dass das Computerprogrammprodukt eine für die Übersendung über ein Rechnernetzwerk, insbesondere das Internet, geeignete, Daten darstellende Signalfolge ist.

12. Computerprogrammprodukt nach Anspruch 10 oder 11,
**dadurch gekennzeichnet,**
**dass** das Veränderungssoftwaremodul dazu vorgesehen ist, die gesprochene Sprache und/oder ein Ergebnis einer Verarbeitung der gesprochenen Sprache mittels des Spracherkennungssoftwaremoduls (110,121,140) an ein Suchsoftwaremodul (122) zu übermitteln, das in dem Sprachsteuerungssoftwaremodul (102) gebildet ist oder extern auf einem zur Datenübertragung mit der Sprachsteuerungssoftwaremodul (102) verbunden Server (20) gespeichert ist, und das Suchsoftwaremodul (122) dazu vorgesehen ist, zu ermitteln, ob das Sprachsteuerungssoftwaremodul (102) durch die Erweiterungssoftware (124-124n) derart veränderbar ist, dass es zur Bestimmung und zur Bearbeitung des Steuerungsauftrags einrichtbar ist.

13. Computerprogrammprodukt nach einem der Ansprüche 10 bis 12,
**dadurch gekennzeichnet,**
**dass** das Suchsoftwaremodul (122) dazu vorgesehen ist, auf eine Datenbank (123) zuzugreifen, in der unterschiedliche Erweiterungssoftware gespeichert ist, mittels derer sich die Spracherkennungsfähigkeit des Sprachsteuerungsmoduls verbessern oder/und erweitern lässt, und die dazu vorgesehen sind, zu ermitteln, ob die Datenbank zumindest eine Erweiterungssoftware umfasst, mit der das Sprachsteuerungssoftwaremodul zur Bestimmung und Bearbeitung des Steuerungsauftrags einrichtbar ist.

14. Computerprogrammprodukt nach einem der Ansprüche 10 bis 13,
**dadurch gekennzeichnet,**
**dass** das Veränderungssoftwaremodul (114) dazu vorgesehen ist, die Erweiterungssoftware von dem Server (120) zu laden, wenn festgestellt worden ist, dass das Sprachsteuerungssoftwaremodul (102) mittels der Erweiterungssoftware (124-124n) zur Bestimmung und zur Bearbeitung des Steuerungsauftrags einrichtbar ist, und das Sprachsteuerungssoftwaremodul mittels der Erweiterungssoftware (124-124n) veränderbar ist derart, dass es zur Bestimmung und zur Erledigung des Steuerungsauftrags eingerichtet wird.

15. Computerprogrammprodukt zur Bildung eines Servers (120) in einem Client-Server-System mit einem den Client bildenden Computerprogrammprodukt nach einem der Ansprüche 10 bis 14, wobei das Computerprogrammprodukt direkt in den internen Speicher eines digitalen Computers geladen werden kann und ein Suchsoftwaremodul (122) umfasst, welches dazu vorgesehen ist, aus gesprochener Sprache oder aus einem Ergebnis einer Verarbeitung gesprochener Sprache mittels einer Spracherkennungssoftwaremoduls (110) zu ermitteln, ob ein Sprachsteuerungssoftwaremodul (102) eines Clients des Client-Server-Systems durch eine Erweiterungssoftware (124-124n) derart veränderbar ist, dass es zur Bestimmung und zur Bearbeitung eines Steuerungsauftrags, zu dessen Bestimmung und Bearbeitung das Sprachsteuerungssoftwaremodul (102) des Clients nicht geeignet ist, einrichtbar ist,
**dadurch gekennzeichnet,**
**dass** das den Client bildende Computerprogrammprodukt mittels der Erweiterungssoftware (24-24n) derart veränderbar ist, dass ein Zugriff auf vorher mittels des Computerprogrammprodukts nicht abrufbare Information aus dem Internet ermöglicht wird, indem in die Software eine Schnittstelle zur Kontaktaufnahme mit einem Informationsdienst im Internet implementiert wird und die Software derart aktualisiert wird, dass sie über die Schnittstelle aus dem Internet neu abrufbare Informationen verarbeiten kann.

## Claims

1. Voice control method, in particular for controlling a personal computer, a smartphone, an on-board computer of a vehicle (1) or other apparatuses, in which it is determined whether a control request can be determined from spoken language recorded using a recording device (3) and processed using a voice recognition device (10, 21, 40), a voice control device (2) being operated using software which can be changed by means of at least one piece of expansion software (24-24n) which is provided for downloading from a server (20), the voice control device (2) comprising a device (14) for changing the software, which device (14), if it has been determined that the voice control device (2) is not set up to determine and process the control request, checks whether the voice control device (2) can be set up to determine and process the control request by means of the expansion software (24-24n),
**characterized**
**in that** the software is changed by means of the expansion software (24-24n) in such a manner that the software can be used to access information which could previously not be called up from the Internet by virtue of an interface for making contact with an information service of the Internet being implemented in the software and the software being updated in such a manner that it can process the information which can be newly retrieved from the Internet via the interface.

2. The method according to Claim 1,
**characterized in that**
the change device (14) transmits the spoken language and/or a result of processing of the spoken language by means of the voice recognition device (10, 21, 40) to a search device (22) which is formed in the voice control device (2) or externally on a server (20) connected to the voice control device (2) for data transmission, and the search device (22) determines whether the voice control device (2) can be changed by means of the expansion software (24-24n) in such a manner that it can be set up to determine and process the control request.

3. The method according to Claim 1 or 2,
**characterized in that**
the search device (2) accesses a database (23), which is formed on the server (20) connected to the voice control device (2) for data transmission and stores the different expansion software which can improve the voice recognition ability of the voice control device or/and can expand the software, and determines whether the database comprises at least one piece of expansion software which can be used to set up the voice control device to determine and process the control request.

4. Method according to one of Claims 1 to 3,
**characterized in that**
the change device (14) loads the expansion software from the server (20) if it has been determined that the voice control device (2) can be set up to determine and process the control request by means of the expansion software (24-24n), and the expansion software (24-24n) then changes the software in such a manner that it is set up to determine and perform the control request.

5. Method according to Claim 4,
**characterized in that**
the control request determined using the recorded language is processed by the voice control device (2) changed by means of the expansion software (24-24n), and the control request is preferably automatically processed after the software has been changed.

6. Method according to one of Claims 1 to 5,
**characterized in that**
said voice recognition device (10, 21, 40) is formed locally in the voice control device (2) and/or externally on a server (20) which is connected to the voice control device (2) for data transmission.

7. Method according to one of Claims 1 to 6,
**characterized in that**
the voice recognition device (10, 21, 40) and possibly the search device (22) comprise a voice interpretation device (11) having a semantic interpretation unit (12) which converts the at least one recognized word into an item of machine-readable information which forms the control request, the voice interpretation device (11) and possibly the search device (2) preferably additionally comprising a context-based interpretation unit (13) which determines whether the voice control device (2) is set up to process the machine-readable control request.

8. Method according to one of Claims 1 to 7,
**characterized in that**
the expansion software (24-24n) comprises various expansion modules (26-26n) for changing different components of the voice control device (2), the expansion modules (26-26n) preferably being provided to change the voice recognition device (2), the voice interpretation device (11), a dialog manager (15) which forms a linguistic user interface between a user of the voice control device and the voice control device, a voice output device (16) which is used to transmit information from the linguistic user interface to the user, and/or a graphical user interface (17) for operating the voice control device.

9. Method according to one of Claims 2 to 8,
**characterized in that**
the search device (22) comprises a comparison device (27) which compares the result of the processing of the spoken language by means of the voice recognition device (10, 21, 40) with a data record (25-25n) which characterizes the expansion software and preferably comprises at least one keyword, the comparison device (27) preferably checking whether the keyword or a plurality of keywords is/are contained in the word(s) determined when processing the spoken language.

10. Computer program product, in particular for forming a client in a client/server system, which can be directly loaded into the internal memory of a digital computer and has a software module for voice control, which can be used to operate a voice control device (102), and a software module for determining a control request, which can be used to determine whether a control request can be determined from spoken language recorded using a recording device (103) and processed using voice recognition software (110, 121, 140), the voice control software module being able to be changed by means of at least one piece of expansion software (124-124n) which can be retrieved for downloading from a server (120), the computer program product comprising a software module for changing the voice control software module, and the change software module being provided for the purpose of checking, if it is determined that the voice control software module is not set up to determine and process the control request, whether the voice control software module can be set up to determine and process the control request by means of the expansion software (124-124n),
**characterized**
**in that** the computer program product can be changed by means of the expansion softwre (24-24n) in such a manner that it is possible to access information which could previously not be retrieved by means of the computer program product from the Internet by virtue of an interface for making contact with an information service on the Internet being implemented in the software and the software being updated in such a manner that it can process information which can be newly retrieved from the Internet via the interface.

11. Computer program product according to Claim 10,
**characterized in that**
the computer program product is a computer program which is stored on a computer-readable data storage medium, preferably RAM, ROM, CD, DVD or the like, or on a device comprising a computer, in particular a personal computer, a smartphone, an on-board computer of a vehicle or another apparatus which can be controlled by means of voice, or **in that** the computer program product is a signal sequence which represents data and is suitable for transmission via a computer network, in particular the Internet.

12. Computer program product according to Claim 10 or 11,
**characterized in that**
the change software module is provided for the purpose of transmitting the spoken language and/or a result of processing of the spoken language by means of the voice recognition software module (110, 121, 140) to a search software module (122) which is formed in the voice control software module (102) or is externally stored on a server (20) connected to the voice control software module (102) for data transmission, and the search software module (122) is provided for the purpose of determining whether the voice control software module (102) can be changed by means of the expansion software (124-124n) in such a manner that it can be set up to determine and process the control request.

13. Computer program product according to one of Claims 10 to 12,
**characterized in that**
the search software module (122) is provided for the purpose of accessing a database (123) which stores different expansion software which can be used to improve or/and expand the voice recognition ability of the voice control module and is provided for the purpose of determining whether the database comprises at least one piece of expansion software which can be used to set up the voice control software module to determine and process the control request.

14. Computer program product according to one of Claims 10 to 13,
**characterized in that**
the change software module (114) is provided for the purpose of loading the expansion software from the server (120) if it has been determined that the voice control software module (102) can be set up to determine and process the control request by means of the expansion software (124-124n), and the voice control software module can be changed by means of the expansion software (124-124n) in such a manner that it is set up to determine and perform the control request.

15. Computer program product for forming a server (120) in a client/server system having a computer program product according to one of Claims 10 to 14 which forms the client, the computer program product being able to be directly loaded into the internal memory of a digital computer and comprising a search software module (122) which is provided for the purpose of determining, from spoken language or from a result of processing of spoken language by means of a voice recognition software module (110), whether a voice control software module (102) of a client of the client/server system can be changed by means of expansion software (124-124n) in such a manner that it can be set up to determine and process a control request, for the determination and processing of which the voice control software module (102) of the client is not suitable
**characterized in that**
the computer program product forming the client can be changed by means of the expansion software (24-24n) in such a manner that it is possible to access information which could previously not be retrieved by means of the computer program product from the Internet by virtue of an interface for making contact with an information service on the Internet being implemented in the software and the software being updated in such a manner that it can process information which can be newly retrieved from the Internet via the interface.

## Revendications

1. Procédé de commande vocale, en particulier pour commander un ordinateur personnel, un smartphone, un ordinateur de bord d'un véhicule (1) ou d'autres appareils, dans lequel on détermine si un ordre de commande peut être déterminé à partir de la parole énoncée qui est enregistrée au moyen d'un dispositif d'enregistrement (3) et traitée au moyen d'un dispositif de reconnaissance vocale (10, 21, 40),
dans lequel
un dispositif de commande vocale (2) est exploité au moyen d'un logiciel qui peut être modifié par au moins un logiciel d'extension (24 - 24n) qui est prévu pour le téléchargement à partir d'un serveur (20), et
le dispositif de commande vocale (2) comprend un moyen (14) de modification du logiciel qui, si l'on a constaté que le dispositif de commande vocale (2) n'est pas configuré pour déterminer et traiter l'ordre de commande, vérifie si le dispositif de commande vocale (2) peut être configuré pour déterminer et traiter l'ordre de commande en utilisant le logiciel d'extension (24 - 24n),
**caractérisé en ce que**
le logiciel est modifié au moyen du logiciel d'extension (24 - 24n) de manière à ce que le logiciel permette d'accéder à des informations précédemment non récupérables sur l'Internet en mettant en œuvre une interface dans le logiciel pour la prise de contact avec un service d'information sur l'Internet et en mettant à jour le logiciel de manière à ce qu'il puisse traiter les informations qui peuvent être nouvellement récupérées sur l'Internet par l'intermédiaire de l'interface.

2. Procédé selon la revendication 1,
**caractérisé en ce que**
le dispositif de modification (14) transmet la parole énoncée et/ou un résultat du traitement de la parole énoncée au moyen du dispositif de reconnaissance vocale (10, 21, 40) à un dispositif de recherche (22) formé dans le dispositif de commande vocale (2) ou de manière externe sur un serveur (20) connecté au dispositif de commande vocale (2) pour la transmission de données, et le dispositif de recherche (22) détermine si le dispositif de commande vocale (2) peut être modifié par le logiciel d'extension (24 - 24n) de telle manière qu'il puisse être configuré pour la détermination et le traitement de l'ordre de commande.

3. Procédé selon la revendication 1 ou 2,
**caractérisé en ce que**
le dispositif de recherche (2) accède à une base de données (23) qui est formée sur le serveur (20) connecté au dispositif de commande vocale (2) pour la transmission de données et dans laquelle sont enregistrés les différents logiciels d'extension qui peuvent améliorer la capacité de reconnaissance vocale du dispositif de commande vocale et/ou peuvent étendre le logiciel, et détermine si la base de données comprend au moins un logiciel d'extension avec lequel le dispositif de commande vocale peut être configuré pour déterminer et traiter l'ordre de commande.

4. Procédé selon l'une des revendications 1 à 3,
**caractérisé en ce que**
le dispositif de modification (14) charge le logiciel d'extension à partir du serveur (20) lorsqu'il a été constaté que le dispositif de commande vocale (2) peut être configuré pour déterminer et traiter l'ordre de commande à l'aide du logiciel d'extension (24 - 24n), et le logiciel d'extension (24 - 24n) modifie ensuite le logiciel de manière à ce qu'il soit configuré pour déterminer et exécuter l'ordre de commande.

5. Procédé selon la revendication 4,
**caractérisé en ce que**
l'ordre de commande déterminé au moyen de la parole énoncée enregistrée est traité par le dispositif de commande vocale (2) modifié au moyen du logiciel d'extension (24 - 24n), et l'ordre de commande est de préférence traité automatiquement après modification du logiciel.

6. Procédé selon l'une des revendications 1 à 5,
**caractérisé en ce que**
ledit dispositif de reconnaissance vocale (10, 21, 40) est formé localement dans le dispositif de commande vocale (2) et/ou par voie externe sur un serveur (20) qui est connecté au dispositif de commande vocale (2) pour la transmission de données.

7. Procédé selon l'une des revendications 1 à 6,
**caractérisé en ce que**
le dispositif de reconnaissance vocale (10, 21, 40) et le cas échéant le dispositif de recherche (22) comprennent un dispositif d'interprétation linguistique (11) qui présente une unité (12) d'interprétation sémantique qui convertit ledit au moins un mot reconnu en une information lisible par machine qui constitue l'ordre de commande, le dispositif d'interprétation linguistique (11) et le cas échéant le dispositif de recherche (22) comprenant de préférence en supplément une unité (13) d'interprétation basée sur le contexte qui détermine si le dispositif de commande vocale (2) est configuré pour traiter l'ordre de commande lisible par machine.

8. Procédé selon l'une des revendications 1 à 7,
**caractérisé en ce que**
le logiciel d'extension (24 - 24n) comprend différents modules d'extension (26 - 26n) pour modifier différents composants du dispositif de commande vocale (2), les modules d'extension (26 - 26n) étant de préférence configurés pour modifier : le dispositif de reconnaissance vocale (2) ; le dispositif d'interprétation linguistique (11) ; un gestionnaire de dialogue (15) qui forme une interface utilisateur vocale entre un utilisateur du dispositif de commande vocale et le dispositif de commande vocale ; un dispositif de sortie vocale (16) au moyen duquel des informations de l'interface utilisateur vocale sont transmises à l'utilisateur ; et/ou une interface utilisateur graphique (17) pour manipuler le dispositif de commande vocale.

9. Procédé selon l'une des revendications 2 à 8,
**caractérisé en ce que**
le dispositif de recherche (22) comprend un dispositif de comparaison (27) qui compare le résultat du traitement de la parole énoncée au moyen du dispositif de reconnaissance vocale (10, 21, 40) avec un lot de données (25 - 25n) caractérisant le logiciel d'extension, comprenant de préférence au moins un mot-clé, le dispositif de comparaison (27) vérifiant de préférence si le mot-clé ou plusieurs mots-clés sont contenus dans le ou les mots déterminés par lors du traitement de la parole énoncée.

10. Produit de programme d'ordinateur, en particulier pour constituer un client dans un système client-serveur, qui peut être chargé directement dans la mémoire interne d'un ordinateur numérique et qui comporte un module de logiciel pour la commande vocale, au moyen duquel on peut faire fonctionner un dispositif de commande vocale (102), et un module de logiciel pour déterminer un ordre de commande, au moyen duquel on peut déterminer si un ordre de commande peut être déterminé à partir de la parole énoncée enregistrée au moyen d'un dispositif d'enregistrement (103) et traitée au moyen d'un logiciel de reconnaissance vocale (110, 121, 140),
dans lequel
le module de logiciel de commande vocale peut être modifié par au moins un logiciel d'extension (24 - 24n) qui est prévu pour le téléchargement à partir d'un serveur (120), et
le produit de programme d'ordinateur comprend un module de logiciel pour la modification du module de logiciel de commande vocale, et le module de logiciel de modification est prévu pour vérifier, dans le cas où l'on a constaté que le module de logiciel de commande vocale n'est pas configuré pour déterminer et traiter l'ordre de commande, si le module de logiciel de commande vocale peut être configuré pour déterminer et traiter l'ordre de commande en utilisant le logiciel d'extension (124 - 124n),
**caractérisé en ce que**
le produit de programme d'ordinateur peut être modifié au moyen du logiciel d'extension (24 - 24n) de manière à permettre d'accéder à des informations précédemment non récupérables sur l'Internet au moyen du produit de programme d'ordinateur en mettant en œuvre une interface dans le logiciel pour la prise de contact avec un service d'information sur l'Internet et en mettant à jour le logiciel de manière à ce qu'il puisse traiter les informations qui peuvent être nouvellement récupérées sur l'Internet par l'intermédiaire de l'interface.

11. Produit de programme d'ordinateur selon la revendication 10,
**caractérisé en ce que**
le produit de programme d'ordinateur est un programme d'ordinateur qui est mémorisé sur un support de données lisible par ordinateur, de préférence par RAM, ROM, CD, DVD ou similaire, ou sur un appareil comprenant un ordinateur, en particulier sur un ordinateur personnel, un smartphone, un ordinateur de bord d'un véhicule ou d'un autre appareil à commander par voie vocale, ou **en ce que**
le produit de programme d'ordinateur est une succession de signaux représentant des données et apte à la transmission par un réseau d'ordinateur, en particulier par l'Internet.

12. Produit de programme d'ordinateur selon la revendication 10 ou 11,
**caractérisé en ce que**
le module de logiciel de modification est prévu pour transmettre la parole énoncée et/ou un résultat du traitement de la parole énoncée au moyen du module de logiciel de reconnaissance vocale (110, 121, 140) à un module de logiciel de recherche (122) formé dans le module de logiciel de commande vocale (102) ou de manière externe sur un serveur (20) connecté au module de logiciel de commande vocale (102) pour la transmission de données, et le module de logiciel de recherche (122) est prévu pour déterminer si le module de logiciel de commande vocale (102) peut être modifié par le logiciel d'extension (124 - 124n) de telle manière qu'il puisse être configuré pour la détermination et le traitement de l'ordre de commande.

13. Produit de programme d'ordinateur selon l'une des revendications 10 à 12,
**caractérisé en ce que**
le module de logiciel de recherche (122) est prévu pour accéder à une base de données (123) dans laquelle sont enregistrés différents logiciels d'extension qui peuvent améliorer et/ou étendre la capacité de reconnaissance vocale du module de commande vocale et qui sont prévus pour déterminer si la base de données comprend au moins un logiciel d'extension avec lequel le module de logiciel de commande vocale peut être configuré pour déterminer et traiter l'ordre de commande.

14. Produit de programme d'ordinateur selon l'une des revendications 10 à 13,
**caractérisé en ce que**
le module de logiciel de modification (114) est prévu pour charger le logiciel d'extension à partir du serveur (120) lorsqu'il a été constaté que le module de logiciel de commande vocale (102) peut être configuré pour déterminer et traiter l'ordre de commande à l'aide du logiciel d'extension (124 - 124n), et le module de logiciel de commande vocale peut être modifié au moyen du logiciel d'extension (124 - 124n) de manière à ce qu'il soit configuré pour déterminer et exécuter l'ordre de commande.

15. Produit de programme d'ordinateur pour constituer un serveur (120) dans un système client-serveur comportant un produit de programme d'ordinateur constituant le client, selon l'une des revendications 10 à 14, le produit de programme d'ordinateur pouvant être chargé directement dans la mémoire interne d'un ordinateur numérique et comportant un module de logiciel de recherche (122) qui est prévu pour déterminer, à partir de la parole énoncée ou d'un résultat d'un traitement de la parole énoncée au moyen d'un module de logiciel de reconnaissance vocale (110), si un module de logiciel de commande vocale (102) d'un client du système client-serveur peut être modifié par un logiciel d'extension (124 - 124n) de telle manière qu'il puisse être configuré pour la détermination et le traitement d'un ordre de commande, à la détermination et au traitement duquel le module de logiciel de commande vocale (102) du client n'est pas approprié,
**caractérisé en ce que**
le produit de programme d'ordinateur constituant le client peut être modifié au moyen du logiciel d'extension (24-24n) de manière à permettre un accès à des informations précédemment non récupérables sur l'Internet au moyen du produit de programme d'ordinateur, en mettant en œuvre une interface dans le logiciel pour la prise de contact avec un service d'information sur l'Internet et en mettant à jour le logiciel de manière à ce qu'il puisse traiter les informations qui peuvent être nouvellement récupérées sur l'Internet par l'intermédiaire de l'interface.
